# EUROPEAN PATENT APPLICATION

(11) **EP 2 431 332 A1**
(43) Date of publication of application: **21.03.2012**
(21) Application number: 11181520.5
(22) Date of filing: 15.09.2011
(51) Int. Cl.: C02F 1/00, E03B 1/04, C02F 1/32, C02F 1/78, C02F 1/76

(54) **Apparatus and method for water treatment**

(30) Priority: 17.09.2010 GB 1015689
(71) Applicant: Aquality Trading & Consulting Ltd., London W3 0RX (GB)
(72) Inventor: Johnen, Lutz, London W3 0RX (GB)
(74) Representative: Prock, Thomas

(57) **Abstract**

An apparatus (200) comprising two inlets (210,230) for receiving water flows (220,240) of differing quality. The apparatus (200) comprises a water treatment device (310) for treating one of the water flows. The apparatus (200) is arranged to disable the treatment device if only water from the other inlet is conveyed to an outlet.

## Description

### FIELD OF THE INVENTION

The present invention relates to the field of water treatment. The present invention in particular relates to an apparatus and method for treatment of water requiring treatment and that may be provided to an outlet intermittently with a water supply that does not require treatment.

### BACKGROUND

Non-potable water, such as rain water, borehole water and grey water can be employed in situations that do not necessarily require the use of potable water. Such water can be used, for example, in toilettes or washing machines, for irrigation, in cooling towers, to wash vehicles such as trucks and trains and for other industrial as well as non-industrial uses. To ensure that these above mentioned water types can be safely used they may require treatment. The above mentioned sources of water may, moreover, not be available at all times, so that a backup water supply is required to ensure a consistent supply of water. Such backup supplies often use potable water from the water mains.

### SUMMARY OF THE INVENTION

According to an aspect of the present invention there is provided an apparatus comprising a first inlet for receiving a first water flow, a second inlet for receiving a second water flow, an outlet connected to the first and second inlets, a water treatment device connected to treat at least a water flow received through the first inlet and a controller operative to deactivate the water treatment device at a time when the water conveyed to the outlet has exclusively been received through the second inlet or at a time where there is not flow of water to/from the outlet. The treatment device may be activated at all other times. By deactivating the water treatment device in this manner energy required for operating the treatment device can be saved and the consumption of any chemicals required for the treatment can be reduced.

The water received through the first inlet may be of inferior quality to that received through the second inlet, and may require treatment. The water received through the first inlet may be grey water (as defined in British Standard BS8525), including bathroom grey water (as defined in British Standard BS8525) such as water drained from a shower, bath or hand basin, water gained from a borehole, rainwater etc. The water received through the second inlet may be water that can be used without requiring treatment, for example potable water.

The water treatment device may be activated at other times when water that is to be conveyed to the outlet has been or is being received from the first inlet and/or when the water that is to be conveyed to the outlet is or may be a mixture of water received from both inlets. It is also envisaged that the treatment device can be activated at all times during which the

The apparatus may further comprise at least one of a sensor arranged to provide a signal indicative of an inflow of water through the first inlet to the controller or a valve/flow switch operative to allow inflow of water through said first inlet and arranged to provide a signal indicative of an opening state to the controller. The controller can in this case be operative to activate the treatment device following the receipt of a signal from the sensor indicating that water flows into the apparatus through the first inlet or following the receipt of a signal from the valve/flow switch indicates that an opening position of the valve/flow switch can allow such inflow.

The apparatus may comprise a timer that is operative to deactivate the treatment device at times for which it is known that no water is or will be drawn from the outlet, such as at times when certain buildings in which the apparatus may be installed are known to be uninhabited, such an office building or a shop at night. The controller can, however, be arranged so that any such timer function may be overridden, for example by a sensor input indicating (unexpected) use. Alternatively, if the timer based de-activation of the treatment device is not to be overridden, the apparatus may be arranged so that any (unexpected) demand for water while the treatment device is deactivated is provided by directing water from the second inlet to the outlet, so that treatment is not necessary. The apparatus may comprise a valve/flow switch, located within the apparatus so as to control flow through the second inlet. The apparatus may be arranged so that the valve/flow switch is opened, thereby allowing inflow through the second inlet, when the controller/timer deactivates the treatment device. It will be appreciated that defaulting to the use of water from the second inlet has advantages, even if no timer is used. The apparatus may thus be configured, for example through the use of the above mentioned flow switches/valves and/or pumps that only permit flow from the second inlet to the outlet, at times when the treatment device is deactivated.

The apparatus may further comprise a pump arranged to convey one of (i) the entirety of the water flow receivable through the first inlet or (ii) the entirety of the water flow conveyed to the outlet. In the presence of such a pump the controller may be operative to activate the treatment device at times when the pump is activated. It will be appreciated that, if the pump is located in the apparatus so that the entirety of the water flow receivable through the first inlet is conveyed by it, the treatment device may be deactivated at times when exclusively water from the second inlet is conveyed to the outlet. If the pump is located in the apparatus so as to convey all of the flow to the outlet, the treatment device may only be deactivated when no water is conveyed to the outlet. The controller may be arranged to activate the treatment device when receiving a signal from a sensor indicating that the pump is active. Such a sensor may be a water pressure sensor arranged to sense water pressure at a location close to the pump or another type of sensor, such as, for example, a sensor monitoring the electrical activity of the pump. One example of such a sensor could be an induction sensor located close to a power cord of the pump. Any other known sensor for the monitoring of electrical activity may, however, be used in embodiments of the invention.

If the apparatus comprises a valve or flow switch that can allow/prevent the inflow of water through the first inlet or the outflow of water through the outlet or if the apparatus comprises a pump arranged to cause any such flow the controller may be arranged to activate the treatment device a predetermined period of time before an activation of a valve/flow switch or pump that would allow/cause the flow of water requiring treatment into or out of the apparatus. The controller may additionally or alternatively be arranged to keep the treatment device in an activated state for a predetermined period of time after a flow of water requiring treatment into the apparatus or out of the apparatus has stopped. It will be appreciated that the controller can be operative to react to input signals provided by the sensor or by sensors. The controller may, however, also or alternatively be arranged to send signal to pumps and/or valves/flow switches to cause activation of the pump or opening of the valve/flow switch.

The controller may be arranged to de-activate the treatment device only a predetermined period of time after a water flow received through the second inlet has started to be provided to the outlet. This ensures that any mixing between the two water flows that may occur does not lead to the output of mixed but untreated water. The apparatus may equally be arranged to re-activate the treatment device a predetermined time prior to the start of expelling a water flow that requires treatment from the apparatus.

The treatment device may be arranged within the apparatus so that either the entirety of the water flow through the first inlet can be received/treated by it or so that the entirety of the water flow to the outlet can be received/treated by it.

The treatment device can be a water disinfecting device comprising one or more of a device for irradiating water and a device for adding an additive to water. Devices for irradiating water can include a device for irradiating water, or a water flow, with UV light. A device for adding an additive to water may be a device for adding any chemical additive to the water that is suitable for achieving the treatment aim. In a water disinfecting device the additive may, for example, be chlorine or ozone.

It will be appreciated that the present invention is not limited to treatment devices that require flow of the water to be treated through the device. Apparatus are known that store a supply of water, either of the water that requires treatment, of the water that does not require treatment, or of a mixture of both. It will be appreciated that the treatment device may be arranged to act on a reservoir used for such storage, so that the stored water can be maintained in a treated or a disinfected state. Disinfecting devices adding an additive to the stored water may be particularly suitable for this purpose. The disinfecting device may additionally or alternatively be arranged to drain water from a reservoir, treat it and subsequently return it to the reservoir, to maintain the water in the reservoir in a treated state.

The above described apparatus may find use in a number of water supply systems that provide the water supplied through the outlet to non-industrial uses, such as the uses mentioned above, or even to industrial uses. The first inlet of the apparatus may be connected to a reservoir for the storage of rainwater, bore hole water or grey water etc.

The present invention is not limited to the above described apparatus and according to another aspect of the present invention there is provided a method of sourcing water. The method comprises providing first and second sources of water to a treatment apparatus. Water from the first source requires treatment before use and water from the second source does not require treatment before use. Water from the first source is conveyed to an outlet of the apparatus at one time. At another time water from the second source is conveyed to the outlet. A treatment device of the treatment apparatus that is arranged to treat at least a flow of water received through the first inlet is deactivated for a time during which water conveyed to the outlet is exclusively provided by the second source, or for a time during which no water flows to/from the outlet.

### BRIEF DESCRIPTION OF THE DRAWINGS

Embodiments of the present invention will be described in the following by way of example only and with reference to the accompanying drawings, in which:
Figure 1 shows a first apparatus according to an embodiment of the present invention; and
Figure 2 shows another apparatus according to an embodiment of the present invention.

### DETAILED DESCRIPTION OF EMBODIMENTS

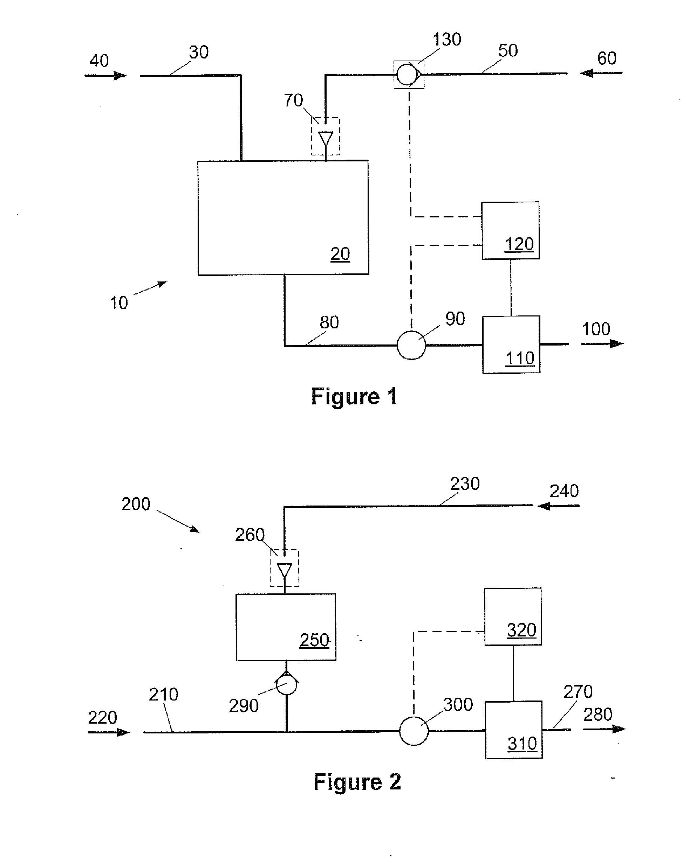

Figure 1 illustrates a system 10 in which the present invention can be implemented comprising a reservoir 20 with a first inlet 30 for conveying a flow 40 of water of a (at least perceived) inferior quality, such as, for example, grey water, borehole water or rain water, to the reservoir 20. The system 10 also comprises a second inlet 50 that is arranged to convey a flow 60 of water having a quality that is suitable for a desired use to the reservoir 20. An air gap 70 is arranged to prevent flow back from the reservoir 20 into the source of the water flow 60.

The reservoir 20 also comprises an outlet 80 with a pump 90 that supplies a pressurised outflow 100. A water treatment device 110 is provided downflow of the pump 90, although the water treatment device 110 could alternatively be located upflow of the pump 90. A controller 120 can be in signal communication with the pump (as indicated by the dashed line) to obtain a signal indicative of an operating state of the pump 90 or to control the pump 90.

Also shown is a flow valve/switch 130 in the inlet 50. This flow valve/switch 130 can prevent inflow through the second inlet 50 at times where sufficient water is flowing into the reservoir 20 through inlet 30 or at times where there is not outflow 100. The flow switch/valve may be connected via a signal connection to the controller 120 (as indicated by the dashed lines), either to be controlled by the controller 120 or to provide a signal indicating an opening or closing state of the flow switch/valve to the controller 120. The controller 120 may be arranged to only open the flow switch/valve 130 when the reservoir 20 is empty to prevent mixing the flow of water 60 with water in the reservoir 20 that requires treatment. In this manner it is ensured that water reaching the treatment device after the opening of the flow switch 130 is water that does not require treatment. The controller 120 may be arranged to deactivate the treatment device 110 substantially simultaneously with the opening of the flow switch 130 or after a short time delay required to ensure that any water of the water flow 40 that may have remained in the conduits leading up to the treatment device 110 has been flushed out of the system. This is possible as the water holding capacities of the different parts of the system are generally known, so that a relevant time delay can be determined with knowledge of the volume of water flowing into the system per time unit through inlet 50.

Although not shown, a sensor for detecting the filling state of the reservoir 20 can be provided and a signal indicative of the filing state of the reservoir can be provided to the controller 120 via a signal line. A thus transmitted signal can enable the controller 120 to determine a need for water from the second inlet 50 for filling the reservoir and the controller 120 may control the flow switch 130 in accordance with such a determined need.

Figure 2 illustrates another system in which the present invention can be implemented. Figure 2 illustrates a system 200 comprising a first inlet 210 for receiving a first water flow 220. The first water flow 220 is of a quality that requires treatment before use. It will be noted that in the Figure 2 system the first water flow 220 does not feed into a reservoir and is therefore not stored within the system 200 in substantive quantities. A second inlet 230 to the system 200 for receiving a second water flow 240 is also provided. The second water flow 240 does not require treatment before use and is stored in a reservoir 250 in this embodiment.

An outlet 270 of the apparatus can provide an outflow 280 that consists of either a water flow received through the first inlet 210 or a water flow received through the second inlet 230. It will be appreciated that a mixture of both water flows can also be conveyed to the outlet 270.

An air gap 260 is provided between the second inlet 230 and the reservoir 250 to prevent flowback to the second inlet 230 from the reservoir 250. To prevent contamination of the water in the reservoir 250 with water received through the first inlet 210, a valve 290 is provided in a conduit connecting the reservoir 250 with the first inlet 210/the outlet 270. The valve 290 is responsible for switching between water flows 220 and 240.

The apparatus further comprises a pump 300, a treatment/disinfecting apparatus 310 and a controller 320. The controller is operative to activate and deactivate the treatment device 310. Although not shown, the controller 320 can be in signal communication with the valve 290, either to receive a signal from the valve 290 indicating an opening or closing state of the valve 290, or to provide a command to the valve causing the opening or closing of the valve. The controller 320 can activate or deactivate the treatment device 310, so that it is activated as soon as there is a risk or likelihood of water from the first water flow 220 reaching the outlet. The controller may activate the treatment device 310 some time before water from the first water flow 220 is expected to reach the treatment device 310 and/or deactivate the treatment device 310 some time after such water flow has stopped or some time after there is no longer a likelihood that water from the first water flow 220 reaches the treatment device 310.

Although both of the systems 10/200 shown in Figures 1 and 2 comprise a valve in the part of the apparatus that solely conveys water from the second inlet 50/230, it will be appreciated that further or alternative valves can be provided in other locations in the apparatus. A valve can, for example, be connected to the inlet 30/210, so that the water flow 40/220 can be shut down. This is advantageous if the treatment device is (at least partially) timer controlled. In this case any such valve can be closed when the treatment device has been deactivated by the timer function.

The systems 10/200 may alternatively comprise a valve/flow switch in the outlet 80/270, either upstream of any pump provided in the outlet, downstream of a treatment device in the outlet, or, if both a pump and a treatment device are provided in the outlet, as shown in Figures 1 and 2, between the pump and the treatment device. A valve/flow switch in such a location can ensure that no outflow of water is provided while treatment device is deactivated.

Either of the above discussed additional or alternative valves/switching devices in the first inlet or the outlet may be connected to the controller via a signal line. As discussed above, such a signal line can serve to inform the controller of an opening or closing state of the valve or can be used by the controller to cause the valve to open or close in accordance with a corresponding signal provided by the controller.

Although neither of Figures 1 and 2 illustrate the use of flow sensors, it will be appreciated that such flow sensors may be used in the present invention. Of particular advantage are flow sensors provided along the first inlet, as such flow sensors can monitor the entry of water requiring treatment into the systems 10/200. Other flow sensors may also or alternatively be provided, for example in the outlet or in the second inlet. Either of these flow sensors comprises a signal connection to the controller for providing a signal indicative of a flow to the controller.

It will be appreciated that, while the above description refers to valves and flow switches, solenoid switches that may be controlled by the controller can also be used.

While the present invention has been described above with reference to examples, these examples are not limiting and the scope of the present invention is defined by the following claims.

## Claims

1. An apparatus comprising a first inlet for receiving a first water flow, a second inlet for receiving a second water flow, an outlet connected to be able to receive flow from the first inlet and the second inlet, a water treatment device arranged to be able to treat at least a flow of water from the first inlet and a controller operative to deactivate the water treatment device for a time during which the water conveyed to the outlet has exclusively been received through the second inlet and/or at a time when no water flows to/from the outlet.

2. An apparatus according to Claim 1, further comprising at least one of:
a sensor arranged to provide a signal indicative of an inflow of water through the first inlet to the controller; or
a valve operative to allow inflow of water through said first inlet and arranged to provide a signal indicative of an opening state to the controller;
wherein the controller is operative to activate the treatment device if a signal received from the sensor indicates a water flow into the apparatus through the first inlet or if a signal received from the valve is indicative of an opening position of the valve that can allow such inflow.

3. An apparatus according to Claim 1 or 2, further comprising a pump arranged to convey one of:
the entirety of the water flow receivable through the first inlet; or
the entirety of the water flow conveyed to the outlet;
wherein the treatment device is activated at times when the pump is activated.

4. An apparatus according to any preceding claim, wherein the treatment device is a water disinfecting device comprising one or more of a device for irradiating water and a device for adding a disinfecting additive to water.

5. A method of sourcing water comprising:
providing first and second sources of water to an apparatus, wherein water from the first source requires treatment before use and water from the second source does not require treatment before use;
conveying water from the first source to an outlet of the apparatus at one time and at another time conveying water from the second source to the outlet; and
deactivating a treatment device of the apparatus for a time during which water conveyed to the outlet is exclusively provided from the second source or during a time in which no water flows to/from the outlet, wherein the treatment device is arranged to treat at least water received from the first source.

6. A method according to Claim 5, further comprising activating the treatment device when a sensor indicates a water inflow into the apparatus from the first source or when a signal indicates an opening position of a valve that could allow such inflow.

7. A method according to Claim 5 or 6, further comprising activating the treatment device at a time during which a pump arranged to convey the entirety of the water flow receivable from the first source is activated or at a time during which a pump arranged to convey the entirety of the water flow conveyed to the outlet is activated.
